# EUROPEAN PATENT APPLICATION

(11) **EP 4 429 359 A1**
(43) Date of publication of application: **11.09.2024**
(21) Application number: 22889318.6
(22) Date of filing: 02.11.2022
(51) Int. Cl.: H04W 72/04

(54) **AVAILABLE TIME SLOT DETERMINATION METHOD AND APPARATUS, AND TERMINAL**

(30) Priority: 04.11.2021 CN 202111300572
(71) Applicant: Vivo Mobile Communication Co., Ltd., Dongguan, Guangdong 523863 (CN)
(72) Inventor: WANG, Yong, Dongguan, Guangdong 523863 (CN); WU, Kai, Dongguan, Guangdong 523863 (CN)
(74) Representative: Lavoix
(86) International application number: PCT/CN2022/129253
(87) International publication number: WO 2023/078296

(57) **Abstract**

This application discloses an available slot determining method and apparatus, and a terminal. The method of embodiments of this application includes: before performing a first uplink transmission in a first cell or at a first transmission reception point (Transmitting Receiving Point, TRP), determining, by a terminal, an available slot for the first uplink transmission according to a first rule. The first cell is a serving cell in a plurality of serving cells configured by the network for the terminal, and the first TRP is a TRP in a multiple transmission reception point (Multiple Transmitting Receiving Point, MTRP) scenario.

## Description

### CROSS-REFERENCE TO RELATED APPLICATIONS

This application claims priority to Chinese Patent Application No. 202111300572.8, filed in China on November 04, 2021, which is incorporated herein by reference in its entirety.

### TECHNICAL FIELD

This application relates to the field of communication technologies, and in particular, to an available slot determining method and apparatus, and a terminal.

### BACKGROUND

In the related art, an available slot determining method is only defined as to determine available slots based on semi-static parameters TDD-UL-DL-ConfigurationCommon (TDD-UL-DL-ConfigurationCommon), TDD-UL-DL-Configuration Dedicated (TDD-UL-DL-Configuration Dedicated), or SSB-PositionsInBurst (SSB-PositionsInBurst). However, in a (Time Division Duplexing, TDD) carrier aggregation (Carrier Aggregation, CA) scenario, different serving cells (serving cell) have different configurations; or in a multiple transmission reception points (Multiple Transmission Reception Point, MTRP) scenario, different transmission reception points (Transmission Reception Point, TRP) may have different uplink and downlink configurations based on the foregoing parameters. Based on the foregoing parameters, there may be an uplink and downlink conflict on some symbols. It is not clear how to determine available slots in slots containing these conflicting symbols.

### SUMMARY

Embodiments of this application provide an available slot determining method and apparatus, and a terminal, so as to solve the problem of how to determine an available slot for a half-duplex terminal in a TDD CA scenario.

According to a first aspect, an available slot determining method is provided, including:
before performing a first uplink transmission in a first cell or at a first transmission reception point TRP, determining, by a terminal, an available slot for the first uplink transmission according to a first rule; where
the first cell is a serving cell in a plurality of serving cells configured by the network for the terminal, and the first TRP is a TRP in a multiple transmission reception point MTRP scenario.

According to a second aspect, an available slot determining apparatus is provided, including:
a first determining module configured to, before a first uplink transmission is performed in a first cell or at a first transmission reception point TRP, determine an available slot for the first uplink transmission according to a first rule; where
the first cell is a serving cell in a plurality of serving cells configured by a network for a terminal, and the first TRP is a TRP in a multiple transmission reception point MTRP scenario.

According to a third aspect, a terminal is provided, including a processor, a memory, and a program or instructions stored in the memory and capable of running on the processor, and when the program or instructions are executed by the processor, the steps of the method according to the first aspect are implemented.

According to a fourth aspect, a terminal is provided, including a processor and a communication interface, where the processor is configured to, before a first uplink transmission is performed in a first cell or at a first transmission reception point TRP, determine an available slot for the first uplink transmission according to a first rule; where
the first cell is a serving cell in a plurality of serving cells configured by the network for the terminal, and the first TRP is a TRP in a multiple transmission reception point MTRP scenario.

According to a fifth aspect, a readable storage medium is provided, where the readable storage medium stores a program or instructions, and when the program or instructions are executed by a processor, the steps of the method according to the first aspect are implemented.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program/program product is provided, where the computer program/program product is stored in a non-transient storage medium, and the computer program/program product is executed by at least one processor to implement the steps of the method according to the first aspect.

According to an eighth aspect, a communication device is provided and configured to implement the steps of the method according to the first aspect.

In the embodiments of this application, a half-duplex terminal in TDD CA, before performing a first uplink transmission in a first cell or at a first transmission reception point TRP, determines an available slot for the first uplink transmission according to a first rule, implementing the objective of determining an available slot.

### BRIEF DESCRIPTION OF DRAWINGS

FIG. 1 is a structural diagram of a communication system to which the embodiments of this application can be applied;
FIG. 2 is a schematic flowchart of an available slot determining method according to an embodiment of this application;
FIG. 3 is a schematic modular diagram of an available slot determining apparatus according to an embodiment of this application;
FIG. 4 is a structural block diagram of a communication device according to an embodiment of this application; and
FIG. 5 is a structural block diagram of a terminal according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions. These technologies may also be applied to other applications than the NR system application, for example, the 6th generation (6th Generation, 6G) communication system.

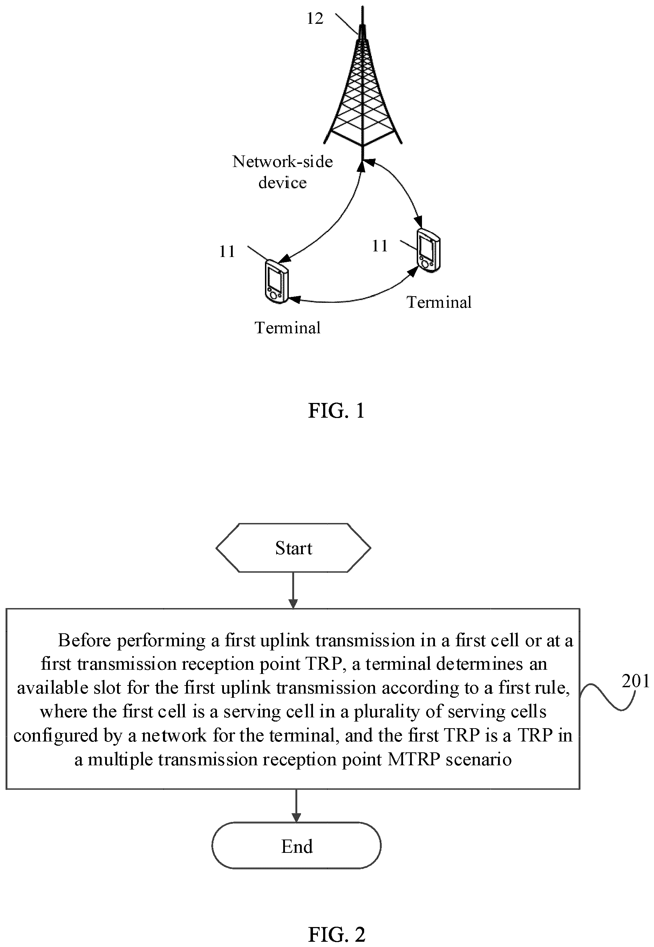

FIG. 1 is a structural diagram of a wireless communication system to which embodiments of this application may be applied. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a smart watch, a wrist band, earphones, glasses, or the like. It should be noted that a specific type of the terminal 11 is not limited in the embodiments of this application. The network-side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN (Wireless Local Area Network, WLAN) access point, a wireless fidelity (Wireless Fidelity, Wi-Fi) node, a transmitting receiving point (Transmitting Receiving Point, TRP), or some other appropriate terms in the art. The base station is not limited to a specific technical term as long as the same technical effect is achieved. It should be noted that the base station in the NR system is taken merely as an example in the embodiments of this application, and the base station is not limited to any specific type.

To better understand the embodiments of this application, the following description is provided.

In the related art, a half-duplex UE refers to a UE that cannot simultaneously perform transmitting and receiving operations. When a network configures the UE to transmit on a plurality of serving cells (serving cell), an uplink transmission and a downlink reception may be configured on the plurality of serving cells at the same time. However, the UE can only perform either the uplink transmission or the downlink reception, but cannot perform transmission and reception simultaneously on the plurality of serving cells. In the plurality of serving cells, a reference cell (reference cell) and other cells (other cell) are defined per symbol (per symbol), as follows:

If the higher-level parameter simultaneousRxTxInterBandCA indicates that the UE does not have the capability of simultaneous transmission and reception on a plurality of serving cells, the reference cell is a cell with a lowest index value in the plurality of serving cells configured; and
if the higher-level parameter simultaneousRxTxInterBandCA indicates that the UE has the capability of simultaneous transmission and reception on a plurality of serving cells, the reference cell is a cell with a lowest index value in one or more serving cells in each band.

In the related art, an available slot determining method is only limited to determination of available slots based on semi-static parameters TDD-UL-DL-ConfigurationCommon, TDD-UL-DL-ConfigurationDedicated, or SSB-PositionsInBurst. There is no clear stipulation on the available slot determining method for a half-duplex (half-duplex) UE in the TDD CA scenario when there is a conflicting symbol between a reference cell and another cell.

For example, on a downlink symbol determined based on TDD-UL-DL-ConfigurationCommon or TDD-UL-DL-ConfigurationDedicated in a reference cell, if another cell has configured an uplink transmission, for example, configured grant-physical uplink shared channel (Configured Grant-Physical Uplink Shared Channel, CG-PUSCH, CG-PUSCH), through radio resource control (Radio Resource Control, RRC), the UE will drop the uplink transmission on the another cell. In this case, in the uplink transmission in the another cell, a slot (slot) in which the symbol is located may be determined as an available slot (available slot) based on TDD-UL-DL-ConfigurationCommon, TDD-UL-DL-ConfigurationDedicated, or SSB-PositionsInBurst. However, the uplink transmission on the another cell will not actually be performed but will be dropped (drop). Therefore, the slot should not be regarded as an available slot.

For another example, according to a protocol, if the transmission symbol of an uplink channel/signal overlaps with any one of SSB transmission symbols configured through SSB-PositionsInBurst on any one of the serving cells, the UE will not transmit the uplink channel or signal. Therefore, even if some flexible symbols (flexible symbols) on the current serving cell are configured as UL symbols, and the slot in which they are located may be regarded as an available slot, once another serving cell configures an SSB transmission on any symbol in that slot through SSB-PositionsInBurst, the UE will not perform the uplink transmission on the current serving cell.

In view of this, an embodiment of this application provides an available slot determining method. The following describes in detail the available slot determining method provided in this embodiment of this application by using some embodiments and application scenarios thereof with reference to the accompanying drawings.

As shown in FIG. 2, an embodiment of this application provides an available slot determining method, which includes the following steps.

Step 201: Before performing a first uplink transmission in a first cell or at a first transmission reception point TRP, a terminal determines an available slot for the first uplink transmission according to a first rule. The first cell is a serving cell in a plurality of serving cells configured by the network for the terminal, the first TRP is a TRP in a multiple transmission reception point MTRP scenario, and the MTRP scenario may be an inter cell (inter cell) MTRP or an intra cell (intra cell) MTRP.

In this embodiment of this application, the foregoing first cell may specifically be a current serving cell of the terminal.

For example, when there is a conflicting symbol between a reference cell and another cell, before performing a first uplink transmission in the first cell or at the first transmission reception point TRP, the terminal determines the available slot for the first uplink transmission according to the first rule. This solves the problem that a half-duplex terminal in TDD CA cannot determine the available slot when there is a conflicting symbol between the reference cell and the another cell.

Optionally, the determining an available slot for the first uplink transmission according to a first rule includes:
determining the available slot for the first uplink transmission according to the first rule, in a case that the terminal does not have a capability of simultaneous transmission and reception in the plurality of serving cells, the terminal has reported a capability of supporting a half-duplex behavior under time division duplex carrier aggregation TDD CA, and a network device has indicated the terminal to perform the half-duplex behavior.

In an embodiment of this application, the network device can indicate the terminal to perform the half-duplex behavior by setting a parameter to "enable (enable)".

Further, the terminal is not configured to monitor downlink control information format 2_0 (Downlink Control Information format 2_0, DCI format 2_0).

In this embodiment of this application, a half-duplex terminal in TDD CA, before performing a first uplink transmission in a first cell or at a first transmission reception point TRP, determines an available slot for the first uplink transmission according to a first rule, implementing the objective of determining an available slot.

Optionally, the capability of simultaneous transmission and reception includes at least one of the following:
a capability of intra-band simultaneous transmission and reception; and
a capability of cross-band simultaneous transmission and reception.

In other words, the terminal does not have the capability of intra-band simultaneous transmission and reception, or the terminal does not have the capability of cross-band simultaneous transmission and reception, or the terminal does not have the capabilities of intra-band and cross-band simultaneous transmission and reception.

Optionally, the first rule includes at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by TDRA of the first uplink transmission are first available symbols, or in a case that all symbols in the slot in which the first uplink transmission is located are first available symbols, determining a slot in which the first available symbols are located as an available slot.

Optionally, the first uplink transmission includes at least one of the following:
physical uplink shared channel (Physical Uplink Shared Channel, PUSCH) repetition;
physical uplink control channel (Physical Uplink Control Channel, PUCCH) repetition; and
PUSCH TB over multiple slots (TB over Multiple Slots, TBoMS) transmission.

Optionally, the PUSCH repetition includes PUSCH repetition type A (PUSCH repetition type A) and PUSCH repetition type B (PUSCH repetition type B).

In the case that the foregoing first uplink transmission is PUSCH repetition type A, the first rule includes at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by time domain resource assignment (Time Domain Resource Assignment, TDRA) of the first uplink transmission are first available symbols, or in a case that all symbols in the slot in which the first uplink transmission is located are first available symbols, determining a slot in which the first available symbols are located as an available slot.

Optionally, the first unavailable symbol includes at least one of the following:
a first symbol corresponding to the first cell, where the first symbol is a symbol for downlink transmission or downlink monitoring indicated by a first semi-static parameter, and the first semi-static parameter includes TDD-UL-DL-ConfigurationCommon, TDD-UL-DL-ConfigurationDedicated, or SSB-PositionsInBurst;
a second symbol corresponding to the first cell, where the second symbol is a symbol overlapping with a third symbol, the third symbol is a symbol configured for synchronization signal/physical broadcast channel signal block SSB transmission on a second cell, and the second cell is a serving cell other than the first cell in a plurality of serving cells configured by the network for the terminal;
a fourth symbol corresponding to the first TRP, where the fourth symbol is a symbol overlapping with a fifth symbol, the fifth symbol is a symbol configured for SSB transmission on another TRP, or the fifth symbol is a symbol configured as a downlink symbol by a semi-static slot format indicator on another TRP, and the another TRP is a TRP other than the first TRP in an MTRP scenario;
a sixth symbol, where the sixth symbol is configured as an uplink symbol by a semi-static slot format indicator (Slot Format Indicator, SFI) of the first cell, that is, Semi SFI U, and is configured as a downlink symbol by a semi-static slot format indicator of a reference cell, that is, Semi SFI D, and the first cell is another cell on the sixth symbol than the reference cell and the reference cell and the another cell are in different bands (band);
a seventh symbol, where the seventh symbol is configured as an uplink symbol by radio resource control (Radio Resource Control, RRC) of the first cell, that is, RRC U, and is configured as a downlink symbol by a semi-static slot format indicator of a reference cell, that is, Semi SFI D, and the first cell is another cell than the reference cell on the seventh symbol;
an eighth symbol, where the eighth symbol is configured as an uplink symbol by radio resource control of the first cell, that is, RRC U, and is configured as a downlink symbol by radio resource control of a reference cell, that is, RRC D; and the first cell is another cell than the reference cell on the eighth symbol; and
a ninth symbol, where the ninth symbol is configured as an uplink symbol by the semi-static slot format indicator of the first cell, that is, Semi SFI U, and is configured as a downlink symbol by radio resource control of a reference cell, that is, RRC D, and the first cell is another cell than the reference cell on the ninth symbol.

Optionally, the first available symbol includes at least one of the following:
a tenth symbol corresponding to the first cell, where the tenth symbol is an uplink symbol or a flexible symbol indicated by a second semi-static parameter, and the tenth symbol does not overlap with a symbol for SSB transmission indicated by a third semi-static parameter on a third cell, the third cell is a cell in the plurality of serving cells, the second semi-static parameter includes TDD-UL-DL-ConfigurationCommon or TDD-UL-DL-ConfigurationDedicated, and the third semi-static parameter includes SSB-PositionsInBurst;
an eleventh symbol corresponding to the first TRP, where the eleventh symbol is an uplink symbol or a flexible symbol indicated by a fourth semi-static parameter, the eleventh symbol does not overlap with a symbol for SSB transmission indicated by a fifth semi-static parameter on another TRP, and the another TRP is a TRP other than the first TRP in an MTRP scenario; the fourth semi-static parameter includes TDD-UL-DL-ConfigurationCommon or TDD-UL-DL-ConfigurationDedicated, and the fifth semi-static parameter includes SSB-PositionsInBurst;
a twelfth symbol, where the twelfth symbol is configured as an uplink symbol by a semi-static slot format indicator of the first cell, that is, Semi SFI U, and is configured as a downlink symbol by a semi-static slot format indicator of a first another cell, that is, Semi SFI D, the first cell is a reference cell on the twelfth symbol, the first another cell is another cell than the reference cell on the twelfth symbol, and the reference and the another cell are in different bands;
a thirteenth symbol, where the thirteenth symbol is configured as an uplink symbol by the semi-static slot format indicator of the first cell, that is, Semi SFI U, and is configured as a downlink symbol by radio resource control of a second another cell, that is, RRC D, and the first cell is a reference cell on the thirteenth symbol and the second another cell is another cell than the reference cell on the thirteenth symbol;
a fourteenth symbol, where the fourteenth symbol is configured as an uplink symbol by radio resource control of the first cell, that is, RRC U, and is configured as a downlink symbol by radio resource control of a third another cell, that is, RRC D, and the first cell is a reference cell on the fourteenth symbol and the third another cell is another cell than the reference cell on the fourteenth symbol; and
a fifteenth symbol, where the fifteenth symbol is configured as an uplink symbol by radio resource control of the first cell (configured as RRC U) and is configured as a downlink symbol by a semi-static slot format indicator of a fourth another cell, that is, Semi SFI D, and the first cell is a reference cell on the fifteenth symbol and the fourth another cell is another cell than the reference cell on the fifteenth symbol.

Optionally, the foregoing semi-static slot format may be indicated by TDD-UL-DL-ConfigurationCommon or TDD-UL-DL-ConfigurationDedicated.

Optionally, when PUSCH repetition is performed based on available slots, the number of repetitions is only counted for the transmissions in the available slots.

Optionally, a redundant version (Redundant Version, RV) used by each PUSCH repetition occasion is determined based on the available slots. To be specific, based on an RV sequence (RV sequence) configured by a higher-level parameter, the (mod (n - 1,4) + 1)th RV in the RV sequence is obtained through calculation, and is the RV corresponding to the nth transmission occasion in K repetitions. The transmission occasion is determined before the first transmission based on the available slots.

Optionally, if the terminal supporting half-duplex carrier aggregation does not support a coverage enhancement function, the terminal does not support the second uplink transmission counted based on the available slots.

Optionally, the foregoing coverage enhancement may be a coverage enhancement in Rel-17. The foregoing second uplink transmission includes at least one of the following:
physical uplink shared channel PUSCH repetition;
physical uplink control channel PUCCH repetition; and
PUSCH transmission over multiple slots.

The foregoing terminal supporting half duplex carrier aggregation satisfies at least one of the following:
having been configured with a plurality of serving cells;
the network has enabled handling of symbol conflicts in the plurality of serving cells through, for example, high-level parameter directionalCollisionHandling-rl6;
the UE does not have the capability of simultaneous transmission and reception in any one of the plurality of serving cells;
the UE has the capability of performing a half-duplex UE behavior under CA; and
having not been configured to monitor DCI format 2-0 on any serving cell.

The following describes the available slot determining method provided in this application with reference to specific embodiments.

All the following embodiments assume that the network has configured a plurality of serving cells, and the UE does not have the capability of simultaneous transmission and reception in any one or more of the plurality of serving cells, and has the capability of performing a half-duplex behavior under TDD CA. The UE is not configured to monitor DCI format 2_0.

### Embodiment 1:

If on a downlink symbol (that is, Semi SFI D) determined on a reference cell based on TDD-UL-DL-ConfigurationCommon or TDD-UL-DL-ConfigurationDedicated, similarly, the corresponding symbol is configured as an uplink symbol on another cell through TDD-UL-DL-ConfigurationCommon or TDD-UL-DL-ConfigurationDedicated, and in this case, the reference cell and the another cell are in different bands, the UE will drop the possible uplink transmission on the another cell. In this case, even if the another cell regards this symbol as an available symbol based on TDD-UL-DL-ConfigurationCommon or TDD-UL-DL-ConfigurationDedicated of the current cell, an uplink transmission will not be actually performed on this symbol. Therefore, if symbols indicated by TDRA of an uplink transmission include this symbol, the slot in which the symbol is located is regarded as an unavailable slot.

### Embodiment 2:

If on a downlink symbol (that is, Semi SFI D) determined on a reference cell based on TDD-UL-DL-ConfigurationCommon or TDD-UL-DL-ConfigurationDedicated, this symbol is configured as a CG-PUSCH repetition transmission on another cell through PPC, the UE will drop the uplink transmission on the another cell. In this case, even if the CG-PUSCH of the another cell regard the slot in which the CG-PUSCH is located as an available slot based on TDD-UL-DL-ConfigurationCommon, TDD-UL-DL-ConfigurationDedicated, or SSB-PositionsInBurst of the current cell, the CG-PUSCH transmission will not actually be performed on the another cell. Therefore, the slot is regarded as an unavailable slot.

### Embodiment 3:

If a downlink transmission is configured on a reference cell through RRC and a configured grant CG-PUSCH repetition transmission is configured on another cell through RRC, the UE will drop the uplink transmission on the another cell. In this case, even if the CG-PUSCH on the another cell may regard the slot in which the symbol is located as an available slot based on TDD-UL-DL-ConfigurationCommon, TDD-UL-DL-ConfigurationDedicated, or SSB-PositionsInBurst of the current cell, the CG-PUSCH repetition transmission will not actually be performed on the another cell but will be dropped. Therefore, the slot is regarded as an unavailable slot.

### Embodiment 4:

If a downlink transmission is configured on a reference cell through RRC, and it is configured as an uplink symbol for an uplink transmission on another cell based on TDD-UL-DL-ConfigurationCommon or TDD-UL-DL-ConfigurationDedicated, the UE will drop the possible uplink transmission on the another cell. In this case, even if the another cell may configure the uplink symbol as an uplink transmission based on TDD-UL-DL-ConfigurationCommon, TDD-UL-DL-ConfigurationDedicated, or SSB-PositionsInBurst of the current cell, the uplink transmission will not actually be performed on the another cell but will be dropped. Therefore, if symbols indicated by TDRA of an uplink transmission include this symbol, the slot in which the symbol is located is regarded as an unavailable slot.

### Embodiment 5:

If on an uplink symbol configured on a reference cell based on TDD-UL-DL-ConfigurationCommon or TDD-UL-DL-ConfigurationDedicated, it is configured as a downlink symbol on another cell based on TDD-UL-DL-ConfigurationCommon or TDD-UL-DL-ConfigurationDedicated, the UE will drop the possible downlink transmission on the another cell. Herein, the downlink transmission does not include an SSB transmission configured through SSB-PositionsInBurst. In this case, such uplink symbols on the reference cell can be further configured as uplink transmissions. Therefore, such symbol can be regarded as available symbols.

### Embodiment 6:

If on an uplink symbol configured on a reference cell based on TDD-UL-DL-ConfigurationCommon or TDD-UL-DL-ConfigurationDedicated, a downlink transmission is configured on another cell through RRC, the UE will drop the possible downlink transmission on the another cell. In this case, such uplink symbols on the reference cell can be further configured as uplink transmissions. Therefore, such symbol can be regarded as available symbols.

### Embodiment 7:

If a CG-PUSCH is configured on a reference cell through RRC, and a downlink transmission is configured on the corresponding symbol on another cell through RRC, the UE will drop the possible downlink transmission on the another cell. In this case, such uplink symbols on the reference cell can be regarded as available symbols.

### Embodiment 8:

If on an uplink symbol configured with a CG-PUSCH on a reference cell through RRC, a downlink symbol is configured on another cell based on TDD-UL-DL-ConfigurationCommon or TDD-UL-DL-ConfigurationDedicated, the UE will drop the possible downlink transmission on the another cell. Herein, the downlink transmission does not include an SSB transmission configured through SSB-PositionsInBurst. In this case, such uplink symbols on the reference cell can be regarded as available symbols.

In this embodiment of this application, a half-duplex terminal in TDD CA, before performing a first uplink transmission in a first cell or at a first transmission reception point TRP, determines an available slot for the first uplink transmission according to a first rule, implementing the objective of determining an available slot.

It should be noted that the available slot determining method provided in this embodiment of this application may be performed by an available slot determining apparatus or a control module for performing the available slot determining method in the available slot determining apparatus. An available slot determining apparatus provided in an embodiment of this application is described by assuming that the available slot determining method in this embodiment of this application is performed by the available slot determining apparatus.

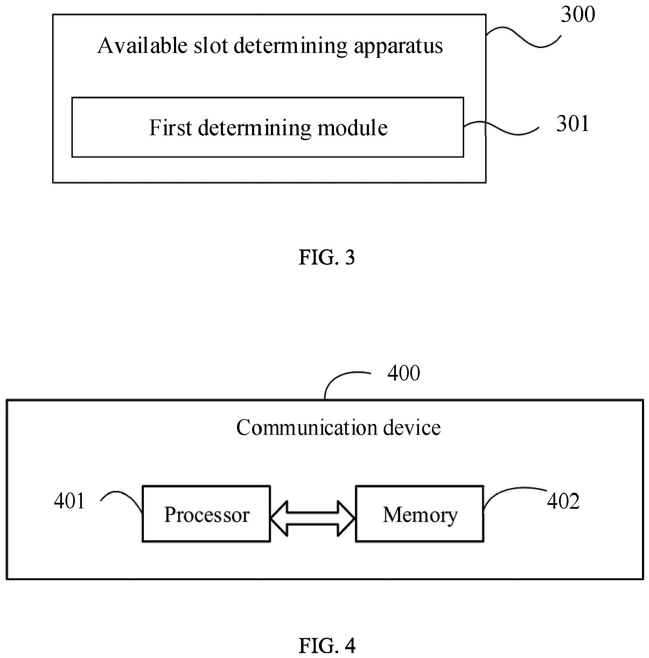

As shown in FIG. 3, an embodiment of this application further provides an available slot determining apparatus 300, including:
a first determining module 301 configured to, before a first uplink transmission is performed in a first cell or at a first transmission reception point TRP, determine an available slot for the first uplink transmission according to a first rule; where
the first cell is a serving cell in a plurality of serving cells configured by a network for a terminal, and the first TRP is a TRP in a multiple transmission reception point MTRP scenario.

Optionally, the apparatus in this embodiment of this application further includes:
a transmission module, configured to perform a first uplink transmission in an available slot of the first uplink transmission.

Optionally, the first determining module is configured to:
determine the available slot for the first uplink transmission according to the first rule, in a case that the terminal does not have a capability of simultaneous transmission and reception in the plurality of serving cells, the terminal has reported a capability of supporting a half-duplex behavior under time division duplex carrier aggregation TDD CA, and a network device has indicated the terminal to perform the half-duplex behavior, .

Optionally, the capability of simultaneous transmission and reception includes at least one of the following:
a capability of intra-band simultaneous transmission and reception; and
a capability of cross-band simultaneous transmission and reception.

Optionally, the first rule includes at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by TDRA of the first uplink transmission are first available symbols, or in a case that all symbols in the slot in which the first uplink transmission is located are first available symbols, determining a slot in which the first available symbols are located as an available slot.

Optionally, the first unavailable symbol includes at least one of the following:
a first symbol corresponding to the first cell, where the first symbol is a symbol for downlink transmission or downlink monitoring indicated by a first semi-static parameter;
a second symbol corresponding to the first cell, where the second symbol is a symbol overlapping with a third symbol, the third symbol is a symbol configured for synchronization signal/physical broadcast channel signal block SSB transmission on a second cell, and the second cell is a serving cell other than the first cell in a plurality of serving cells configured by the network for the terminal;
a fourth symbol corresponding to the first TRP, where the fourth symbol is a symbol overlapping with a fifth symbol, the fifth symbol is a symbol configured for SSB transmission on another TRP, or the fifth symbol is a symbol configured as a downlink symbol by a semi-static slot format indicator on another TRP, and the another TRP is a TRP other than the first TRP in an MTRP scenario;
a sixth symbol, where the sixth symbol is configured as an uplink symbol by a semi-static slot format indicator of the first cell and is configured as a downlink symbol by a semi-static slot format indicator of a reference cell, and the first cell is another cell than the reference cell on the sixth symbol;
a seventh symbol, where the seventh symbol is configured as an uplink symbol by radio resource control of the first cell and is configured as a downlink symbol by a semi-static slot format indicator of a reference cell, and the first cell is another cell than the reference cell on the seventh symbol;
an eighth symbol, where the eighth symbol is configured as an uplink symbol by radio resource control of the first cell and is configured as a downlink symbol by radio resource control of a reference cell, and the first cell is another cell than the reference cell on the eighth symbol; and
a ninth symbol, where the ninth symbol is configured as an uplink symbol by the semi-static slot format indicator of the first cell and is configured as a downlink symbol by radio resource control of a reference cell, and the first cell is another cell than the reference cell on the ninth symbol.

Optionally, the first available symbol includes at least one of the following:
a tenth symbol corresponding to the first cell, where the tenth symbol is an uplink symbol or a flexible symbol indicated by a second semi-static parameter, the tenth symbol does not overlap with a symbol for SSB transmission indicated by a third semi-static parameter on a third cell, and the third cell is a cell in the plurality of serving cells;
an eleventh symbol corresponding to the first TRP, where the eleventh symbol is an uplink symbol or a flexible symbol indicated by a fourth semi-static parameter, the eleventh symbol does not overlap with a symbol for SSB transmission indicated by a fifth semi-static parameter on another TRP, and the another TRP is a TRP other than the first TRP in an MTRP scenario;
a twelfth symbol, where the twelfth symbol is configured as an uplink symbol by a semi-static slot format indicator of the first cell and configured as a downlink symbol by a semi-static slot format indicator of a first another cell, the first cell is a reference cell on the twelfth symbol, and the first another cell is another cell than the reference cell on the twelfth symbol;
a thirteenth symbol, where the thirteenth symbol is configured as an uplink symbol by the semi-static slot format indicator of the first cell and configured as a downlink symbol by radio resource control of a second another cell, the first cell is a reference cell on the thirteenth symbol, and the second another cell is another cell than the reference cell on the thirteenth symbol;
a fourteenth symbol, where the fourteenth symbol is configured as an uplink symbol by radio resource control of the first cell and configured as a downlink symbol by radio resource control of a third another cell, the first cell is a reference cell on the fourteenth symbol, and the third another cell is another cell than the reference cell on the fourteenth symbol; and
a fifteenth symbol, where the fifteenth symbol is configured as an uplink symbol by radio resource control of the first cell and configured as a downlink symbol by a semi-static slot format indicator of a fourth another cell, the first cell is a reference cell on the fifteenth symbol, and the fourth another cell is another cell than the reference cell on the fifteenth symbol.

Optionally, if the terminal supporting half-duplex carrier aggregation does not support the coverage enhancement function in the first standard version, the terminal does not support the second uplink transmission counted based on the available slots.

Optionally, the first uplink transmission or the second uplink transmission includes at least one of the following:
physical uplink shared channel PUSCH repetition;
physical uplink control channel PUCCH repetition; and
PUSCH transmission over multiple slots.

In the apparatus in this embodiment of this application, a half-duplex terminal in TDD CA, before performing a first uplink transmission in a first cell or at a first transmission reception point TRP, determines an available slot for the first uplink transmission according to a first rule, implementing the objective of determining an available slot.

The available slot determining apparatus in this embodiment of this application may be an apparatus or an apparatus or electronic device having an operating system, or may be a component, an integrated circuit, or a chip in a terminal. The apparatus or electronic device may be a mobile terminal or a non-mobile terminal. For example, the mobile terminal may include but is not limited to the types of the terminal listed above, and the non-mobile terminal may be a server, a network attached storage (Network Attached Storage, NAS), a personal computer (personal computer, PC), a television (television, TV), a teller machine, a self-service machine, or the like, which are not specifically limited in the embodiments of this application.

The apparatus provided in this embodiment of this application can implement the processes implemented by the method embodiment in FIG. 2, with the same technical effects achieved. To avoid repetition, details are not described herein again.

Optionally, as shown in FIG. 4, an embodiment of this application further provides a communication device 400 including a processor 401, a memory 402, and a program or instructions stored in the memory 402 and capable of running on the processor 401. For example, in a case that the communication device 400 is a transmitting terminal, the program or instructions are executed by the processor 401 to implement the processes of the foregoing embodiments of the available slot determining method, with the same technical effects achieved. To avoid repetition, details are not described herein again.

An embodiment of this application further provides a terminal, including a processor and a communication interface, where the processor is configured to, before a first uplink transmission is performed in a first cell or at a first transmission reception point TRP, determine an available slot for the first uplink transmission according to a first rule; where
the first cell is a serving cell in a plurality of serving cells configured by the network for the terminal, the first TRP is a TRP in a multiple transmission reception point MTRP scenario, and the MTRP scenario may be an inter cell inter cell MTRP or an intra cell intra cell MTRP.

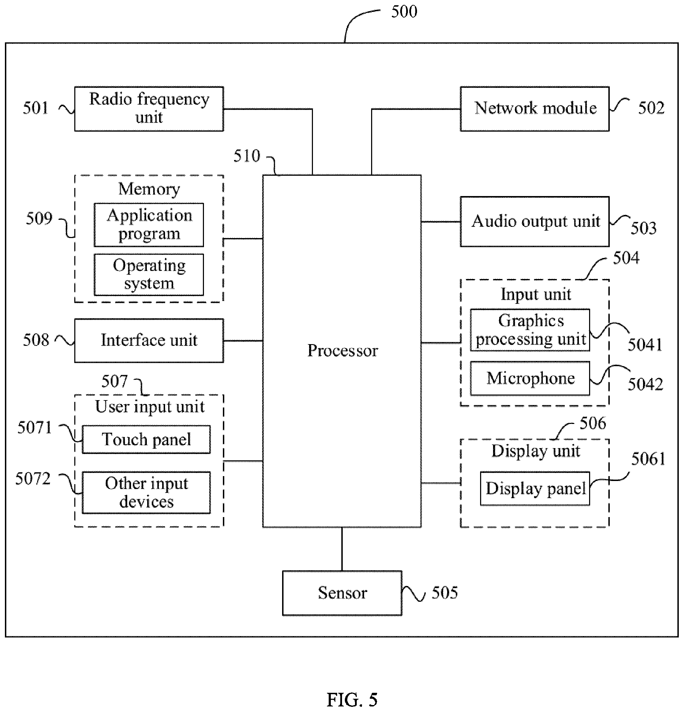

Specifically, FIG. 5 is a schematic structural diagram of hardware of a terminal according to embodiments of this application. The terminal 500 includes but is not limited to at least some of components such as a radio frequency unit 501, a network module 502, an audio output unit 503, an input unit 504, a sensor 505, a display unit 506, a user input unit 507, an interface unit 508, a memory 509, and a processor 510.

A person skilled in the art can understand that the terminal 500 may further include a power supply (for example, a battery) for supplying power to the components. The power supply may be logically connected to the processor 510 through a power management system. In this way, functions such as charge management, discharge management, and power consumption management are implemented by using the power management system. The structure of the terminal shown in FIG. 5 does not constitute any limitation on the terminal, and the terminal may include more or fewer components than shown in the figure, or combine some of the components, or have different arrangements of the components. Details are not described herein.

It should be understood that in this embodiment of this application, the input unit 504 may include a graphics processing unit (Graphics Processing Unit, GPU) 5041 and a microphone 5042. The graphics processing unit 5041 processes image data of a static picture or a video that is obtained by an image capture apparatus (for example, a camera) in a video capture mode or an image capture mode. The display unit 506 may include the display panel 5061. The display panel 5061 may be configured in a form of a liquid crystal display, an organic light-emitting diode, or the like. The user input unit 507 includes a touch panel 5071 and other input devices 5072. The touch panel 5071 is also referred to as a touchscreen. The touch panel 5071 may include two parts: a touch detection apparatus and a touch controller. The other input devices 5072 may include but are not limited to a physical keyboard, a function key (for example, a volume control key or an on/off key), a trackball, a mouse, and a joystick. Details are not described herein.

In this embodiment of this application, the radio frequency unit 501 sends downlink data received from a network-side device to the processor 510 for processing, and in addition, sends uplink data to the network-side device. Generally, the radio frequency unit 501 includes but is not limited to an antenna, at least one amplifier, a transceiver, a coupler, a low noise amplifier, and a duplexer.

The memory 509 may be configured to store software programs or instructions and various data. The memory 509 may mainly include a program or instruction storage region and a data storage region. The program or instruction storage region may store an operating system, an application program or instructions required by at least one function (for example, an audio play function or an image play function), and the like. In addition, the memory 509 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, at least one disk storage device, flash memory device, or other volatile solid-state storage device.

The processor 510 may include one or more processing units. Optionally, an application processor and a modem processor may be integrated into the processor 510. The application processor primarily processes an operating system, user interfaces, application programs or instructions, and the like. The modem processor primarily processes radio communication, for example, being a baseband processor. It can be understood that the modem processor may alternatively be not integrated in the processor 510.

The processor 510 is configured to, before a first uplink transmission is performed in a first cell or at a first transmission reception point TRP, determine an available slot for the first uplink transmission according to a first rule; where
the first cell is a serving cell in a plurality of serving cells configured by the network for the terminal, the first TRP is a TRP in a multiple transmission reception point MTRP scenario, and the MTRP scenario may be an inter cell inter cell MTRP or an intra cell intra cell MTRP.

Optionally, the processor 510 is configured to determine the available slot for the first uplink transmission according to the first rule, in a case that the terminal does not have a capability of simultaneous transmission and reception in the plurality of serving cells, the terminal has reported a capability of supporting a half-duplex behavior under time division duplex carrier aggregation TDD CA, and a network device has indicated the terminal to perform the half-duplex behavior.

Optionally, the capability of simultaneous transmission and reception includes at least one of the following:
a capability of intra-band simultaneous transmission and reception; and
a capability of cross-band simultaneous transmission and reception.

Optionally, the first rule includes at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by TDRA of the first uplink transmission are first available symbols, or in a case that all symbols in the slot in which the first uplink transmission is located are first available symbols, determining a slot in which the first available symbols are located as an available slot.

Optionally, the first unavailable symbol includes at least one of the following:
a first symbol corresponding to the first cell, where the first symbol is a symbol for downlink transmission or downlink monitoring indicated by a first semi-static parameter;
a second symbol corresponding to the first cell, where the second symbol is a symbol overlapping with a third symbol, the third symbol is a symbol configured for synchronization signal/physical broadcast channel signal block SSB transmission on a second cell, and the second cell is a serving cell other than the first cell in a plurality of serving cells configured by the network for the terminal;
a fourth symbol corresponding to the first TRP, where the fourth symbol is a symbol overlapping with a fifth symbol, the fifth symbol is a symbol configured for SSB transmission on another TRP, or the fifth symbol is a symbol configured as a downlink symbol by a semi-static slot format indicator on another TRP, and the another TRP is a TRP other than the first TRP in an MTRP scenario;
a sixth symbol, where the sixth symbol is configured as an uplink symbol by a semi-static slot format indicator of the first cell and is configured as a downlink symbol by a semi-static slot format indicator of a reference cell, and the first cell is another cell than the reference cell on the sixth symbol;
a seventh symbol, where the seventh symbol is configured as an uplink symbol by radio resource control of the first cell and is configured as a downlink symbol by a semi-static slot format indicator of a reference cell, and the first cell is another cell than the reference cell on the seventh symbol;
an eighth symbol, where the eighth symbol is configured as an uplink symbol by radio resource control of the first cell and is configured as a downlink symbol by radio resource control of a reference cell, and the first cell is another cell than the reference cell on the eighth symbol; and
a ninth symbol, where the ninth symbol is configured as an uplink symbol by the semi-static slot format indicator of the first cell and is configured as a downlink symbol by radio resource control of a reference cell, and the first cell is another cell than the reference cell on the ninth symbol.

Optionally, the first available symbol includes at least one of the following:
a tenth symbol corresponding to the first cell, where the tenth symbol is an uplink symbol or a flexible symbol indicated by a second semi-static parameter, the tenth symbol does not overlap with a symbol for SSB transmission indicated by a third semi-static parameter on a third cell, and the third cell is a cell in the plurality of serving cells;
an eleventh symbol corresponding to the first TRP, where the eleventh symbol is an uplink symbol or a flexible symbol indicated by a fourth semi-static parameter, the eleventh symbol does not overlap with a symbol for SSB transmission indicated by a fifth semi-static parameter on another TRP, and the another TRP is a TRP other than the first TRP in an MTRP scenario;
a twelfth symbol, where the twelfth symbol is configured as an uplink symbol by a semi-static slot format indicator of the first cell and configured as a downlink symbol by a semi-static slot format indicator of a first another cell, the first cell is a reference cell on the twelfth symbol, and the first another cell is another cell than the reference cell on the twelfth symbol;
a thirteenth symbol, where the thirteenth symbol is configured as an uplink symbol by the semi-static slot format indicator of the first cell and configured as a downlink symbol by radio resource control of a second another cell, the first cell is a reference cell on the thirteenth symbol, and the second another cell is another cell than the reference cell on the thirteenth symbol;
a fourteenth symbol, where the fourteenth symbol is configured as an uplink symbol by radio resource control of the first cell and configured as a downlink symbol by radio resource control of a third another cell, the first cell is a reference cell on the fourteenth symbol, and the third another cell is another cell than the reference cell on the fourteenth symbol; and
a fifteenth symbol, where the fifteenth symbol is configured as an uplink symbol by radio resource control of the first cell and configured as a downlink symbol by a semi-static slot format indicator of a fourth another cell, the first cell is a reference cell on the fifteenth symbol, and the fourth another cell is another cell than the reference cell on the fifteenth symbol.

Optionally, if the terminal supporting half-duplex carrier aggregation does not support the coverage enhancement function in the first standard version, the terminal does not support the second uplink transmission counted based on the available slots.

Optionally, the first uplink transmission or the second uplink transmission includes at least one of the following:
physical uplink shared channel PUSCH repetition;
physical uplink control channel PUCCH repetition; and
PUSCH transmission over multiple slots.

In this embodiment of this application, a half-duplex terminal in TDD CA, before performing a first uplink transmission in a first cell or at a first transmission reception point TRP, determines an available slot for the first uplink transmission according to a first rule, implementing the objective of determining an available slot.

An embodiment of this application further provides a readable storage medium, where the readable storage medium may be volatile or non-volatile. The readable storage medium stores a program or instructions, and when the program or instructions are executed by a processor, the processes of the foregoing embodiments of the available slot determining method are implemented, with the same technical effects achieved. To avoid repetition, details are not described herein again.

The processor is a processor in the terminal described in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface. The communication interface is coupled to the processor. The processor is configured to run a program or instructions to implement each process of the foregoing available slot determining method embodiment, with the same technical effects achieved. To avoid repetition, details are not described herein again.

An embodiment of this application further provides a computer program/program product. The computer program/program product is stored in a non-transient storage medium, and the computer program/program product is executed by at least one processor to implement the steps of the foregoing available slot determining method.

It should be understood that the chip mentioned in an embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the method and apparatus in the embodiments of this application is not limited to performing the functions in the order shown or discussed, but may also include performing the functions in a substantially simultaneous manner or in a reverse order depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the related art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific embodiments. These specific embodiments are merely for illustration rather than limitation. Inspired by this application, persons of ordinary skill in the art may develop many other forms without departing from the essence of this application and the protection scope of the claims, and all such forms shall fall within the protection scope of this application.

## Claims

1. An available slot determining method, comprising:
before performing a first uplink transmission in a first cell or at a first transmission reception point TRP, determining, by a terminal, an available slot for the first uplink transmission according to a first rule; wherein
the first cell is a serving cell in a plurality of serving cells configured by a network for the terminal, and the first TRP is a TRP in a multiple transmission reception point MTRP scenario.

2. The method according to claim 1, wherein the determining an available slot for the first uplink transmission according to a first rule comprises:
determining the available slot for the first uplink transmission according to the first rule, in a case that the terminal does not have a capability of simultaneous transmission and reception in the plurality of serving cells, the terminal has reported a capability of supporting a half-duplex behavior under time division duplex carrier aggregation TDD CA, and a network device has indicated the terminal to perform the half-duplex behavior.

3. The method according to claim 2, wherein the capability of simultaneous transmission and reception comprises at least one of the following:
a capability of intra-band simultaneous transmission and reception; and
a capability of cross-band simultaneous transmission and reception.

4. The method according to any one of claims 1 to 3, wherein the first rule comprises at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by TDRA of the first uplink transmission are first available symbols, or in a case that all symbols in the slot in which the first uplink transmission is located are first available symbols, determining a slot in which the first available symbols are located as an available slot.

5. The method according to claim 4, wherein the first unavailable symbol comprises at least one of the following:
a first symbol corresponding to the first cell, wherein the first symbol is a symbol for downlink transmission or downlink monitoring indicated by a first semi-static parameter;
a second symbol corresponding to the first cell, wherein the second symbol is a symbol overlapping with a third symbol, the third symbol is a symbol configured for synchronization signal/physical broadcast channel signal block SSB transmission on a second cell, and the second cell is a serving cell other than the first cell in the plurality of serving cells configured by the network for the terminal;
a fourth symbol corresponding to the first TRP, wherein the fourth symbol is a symbol overlapping with a fifth symbol, the fifth symbol is a symbol configured for SSB transmission on another TRP, or the fifth symbol is a symbol configured as a downlink symbol by a semi-static slot format indicator on another TRP, and the another TRP is a TRP other than the first TRP in an MTRP scenario;
a sixth symbol, wherein the sixth symbol is configured as an uplink symbol by a semi-static slot format indicator of the first cell and is configured as a downlink symbol by a semi-static slot format indicator of a reference cell, and the first cell is another cell than the reference cell on the sixth symbol;
a seventh symbol, wherein the seventh symbol is configured as an uplink symbol by radio resource control of the first cell and is configured as a downlink symbol by a semi-static slot format indicator of a reference cell, and the first cell is another cell than the reference cell on the seventh symbol;
an eighth symbol, wherein the eighth symbol is configured as an uplink symbol by radio resource control of the first cell and is configured as a downlink symbol by radio resource control of a reference cell, and the first cell is another cell than the reference cell on the eighth symbol; and
a ninth symbol, wherein the ninth symbol is configured as an uplink symbol by the semi-static slot format indicator of the first cell and is configured as a downlink symbol by radio resource control of a reference cell, and the first cell is another cell than the reference cell on the ninth symbol.

6. The method according to claim 4, wherein the first available symbol comprises at least one of the following:
a tenth symbol corresponding to the first cell, wherein the tenth symbol is an uplink symbol or a flexible symbol indicated by a second semi-static parameter, the tenth symbol does not overlap with a symbol for SSB transmission indicated by a third semi-static parameter on a third cell, and the third cell is a cell in the plurality of serving cells;
an eleventh symbol corresponding to the first TRP, wherein the eleventh symbol is an uplink symbol or a flexible symbol indicated by a fourth semi-static parameter, the eleventh symbol does not overlap with a symbol for SSB transmission indicated by a fifth semi-static parameter on another TRP, and the another TRP is an TRP other than the first TRP in an MTRP scenario;
a twelfth symbol, wherein the twelfth symbol is configured as an uplink symbol by a semi-static slot format indicator of the first cell and configured as a downlink symbol by a semi-static slot format indicator of a first another cell, the first cell is a reference cell on the twelfth symbol, and the first another cell is another cell than the reference cell on the twelfth symbol;
a thirteenth symbol, wherein the thirteenth symbol is configured as an uplink symbol by the semi-static slot format indicator of the first cell and configured as a downlink symbol by radio resource control of a second another cell, the first cell is a reference cell on the thirteenth symbol, and the second another cell is another cell than the reference cell on the thirteenth symbol;
a fourteenth symbol, wherein the fourteenth symbol is configured as an uplink symbol by radio resource control of the first cell and configured as a downlink symbol by radio resource control of a third another cell, the first cell is a reference cell on the fourteenth symbol, and the third another cell is another cell than the reference cell on the fourteenth symbol; and
a fifteenth symbol, wherein the fifteenth symbol is configured as an uplink symbol by radio resource control of the first cell and configured as a downlink symbol by a semi-static slot format indicator of a fourth another cell, the first cell is a reference cell on the fifteenth symbol, and the fourth another cell is another cell than the reference cell on the fifteenth symbol.

7. The method according to any one of claims 1 to 3, wherein the first uplink transmission comprises at least one of the following:
physical uplink shared channel PUSCH repetition;
physical uplink control channel PUCCH repetition; and
PUSCH transmission over multiple slots.

8. An available slot determining apparatus, comprising:
a first determining module configured to, before a first uplink transmission is performed in a first cell or at a first transmission reception point TRP, determine an available slot for the first uplink transmission according to a first rule; wherein
the first cell is a serving cell in a plurality of serving cells configured by a network for a terminal, and the first TRP is a TRP in a multiple transmission reception point MTRP scenario.

9. The apparatus according to claim 8, wherein the first determining module is configured to:
determine the available slot for the first uplink transmission according to the first rule, in a case that the terminal does not have a capability of simultaneous transmission and reception in the plurality of serving cells, the terminal has reported a capability of supporting a half-duplex behavior under time division duplex carrier aggregation TDD CA, and a network device has indicated the terminal to perform the half-duplex behavior.

10. The apparatus according to claim 9, wherein the capability of simultaneous transmission and reception comprises at least one of the following:
a capability of intra-band simultaneous transmission and reception; and
a capability of cross-band simultaneous transmission and reception.

11. The apparatus according to any one of claims 8 to 10, wherein the first rule comprises at least one of the following:
in a case that a symbol set indicated by time domain resource assignment TDRA of the first uplink transmission contains at least one first unavailable symbol, or in a case that a slot in which the first uplink transmission is located contains at least one first unavailable symbol, determining a slot in which the first unavailable symbol is located as an unavailable slot; and
in a case that all symbols in the symbol set indicated by TDRA of the first uplink transmission are first available symbols, or in a case that all symbols in the slot in which the first uplink transmission is located are first available symbols, determining a slot in which the first available symbols are located as an available slot.

12. The apparatus according to claim 11, wherein the first unavailable symbol comprises at least one of the following:
a first symbol corresponding to the first cell, wherein the first symbol is a symbol for downlink transmission or downlink monitoring indicated by a first semi-static parameter;
a second symbol corresponding to the first cell, wherein the second symbol is a symbol overlapping with a third symbol, the third symbol is a symbol configured for synchronization signal/physical broadcast channel signal block SSB transmission on a second cell, and the second cell is a serving cell other than the first cell in the plurality of serving cells configured by the network for the terminal;
a fourth symbol corresponding to the first TRP, wherein the fourth symbol is a symbol overlapping with a fifth symbol, the fifth symbol is a symbol configured for SSB transmission on another TRP, or the fifth symbol is a symbol configured as a downlink symbol by a semi-static slot format indicator on another TRP, and the another TRP is a TRP other than the first TRP in an MTRP scenario;
a sixth symbol, wherein the sixth symbol is configured as an uplink symbol by a semi-static slot format indicator of the first cell and is configured as a downlink symbol by a semi-static slot format indicator of a reference cell, and the first cell is another cell than the reference cell on the sixth symbol;
a seventh symbol, wherein the seventh symbol is configured as an uplink symbol by radio resource control of the first cell and is configured as a downlink symbol by a semi-static slot format indicator of a reference cell, and the first cell is another cell than the reference cell on the seventh symbol;
an eighth symbol, wherein the eighth symbol is configured as an uplink symbol by radio resource control of the first cell and is configured as a downlink symbol by radio resource control of a reference cell, and the first cell is another cell than the reference cell on the eighth symbol; and
a ninth symbol, wherein the ninth symbol is configured as an uplink symbol by the semi-static slot format indicator of the first cell and is configured as a downlink symbol by radio resource control of a reference cell, and the first cell is another cell than the reference cell on the ninth symbol.

13. The apparatus according to claim 11, wherein the first available symbol comprises at least one of the following:
a tenth symbol corresponding to the first cell, wherein the tenth symbol is an uplink symbol or a flexible symbol indicated by a second semi-static parameter, the tenth symbol does not overlap with a symbol for SSB transmission indicated by a third semi-static parameter on a third cell, and the third cell is a cell in the plurality of serving cells;
an eleventh symbol corresponding to the first TRP, wherein the eleventh symbol is an uplink symbol or a flexible symbol indicated by a fourth semi-static parameter, the eleventh symbol does not overlap with a symbol for SSB transmission indicated by a fifth semi-static parameter on another TRP, and the another TRP is an TRP other than the first TRP in an MTRP scenario;
a twelfth symbol, wherein the twelfth symbol is configured as an uplink symbol by a semi-static slot format indicator of the first cell and configured as a downlink symbol by a semi-static slot format indicator of a first another cell, the first cell is a reference cell on the twelfth symbol, and the first another cell is another cell than the reference cell on the twelfth symbol;
a thirteenth symbol, wherein the thirteenth symbol is configured as an uplink symbol by the semi-static slot format indicator of the first cell and configured as a downlink symbol by radio resource control of a second another cell, the first cell is a reference cell on the thirteenth symbol, and the second another cell is another cell than the reference cell on the thirteenth symbol;
a fourteenth symbol, wherein the fourteenth symbol is configured as an uplink symbol by radio resource control of the first cell and configured as a downlink symbol by radio resource control of a third another cell, the first cell is a reference cell on the fourteenth symbol, and the third another cell is another cell than the reference cell on the fourteenth symbol; and
a fifteenth symbol, wherein the fifteenth symbol is configured as an uplink symbol by radio resource control of the first cell and configured as a downlink symbol by a semi-static slot format indicator of a fourth another cell, the first cell is a reference cell on the fifteenth symbol, and the fourth another cell is another cell than the reference cell on the fifteenth symbol.

14. The apparatus according to any one of claims 8 to 10, wherein the first uplink transmission comprises at least one of the following:
physical uplink shared channel PUSCH repetition;
physical uplink control channel PUCCH repetition; and
PUSCH transmission over multiple slots.

15. A terminal, comprising a processor, a memory, and a program or instructions stored in the memory and capable of running on the processor, wherein when the program or instructions are executed by the processor, the steps of the available slot determining method according to any one of claims 1 to 7 are implemented.

16. A readable storage medium, wherein the readable storage medium stores a program or instructions, and when the program or the instructions are executed by a processor, the steps of the available slot determining method according to any one of claims 1 to 7 are implemented.

17. A chip, wherein the chip comprises a processor and a communication interface, the communication interface is coupled to the processor, and the processor is configured to execute a program or instructions to implement the steps of the available slot determining method according to any one of claims 1 to 7.

18. A computer program product, wherein the computer program product is stored in a non-volatile storage medium, and the computer program product is executed by at least one processor to implement the steps of the available slot determining method according to any one of claims 1 to 7.

19. A communication device configured to implement the steps of the available slot determining method according to any one of claims 1 to 7.
